# EUROPEAN PATENT APPLICATION

(11) **EP 4 360 875 A1**
(43) Date of publication of application: **01.05.2024**
(21) Application number: 23157920.2
(22) Date of filing: 22.02.2023
(51) Int. Cl.: B32B 27/06, B32B 5/06, B32B 7/09, B32B 27/12, B32B 27/18, B32B 27/30, B32B 27/40, D06N 3/00

(54) **SHEET CONTAINING A THERMOPLASTIC STYRENIC ELASTOMER, PREPARATION METHOD AND USE**

(30) Priority: 25.10.2022 PT 2022118277
(71) Applicant: TMG - Tecidos Plastificados e Outros Revestimentos para a Indústria Automóvel, S.A., 4770-583 São Cosme do Vale (PT)
(72) Inventor: DO VALE MELO, DAVID EMMANUEL, 4770-583 SÃO COSME VALE (PT); VENTURA GOMES, JOANA MARIA, 4770-583 SÃO COSME VALE (PT); DA SILVA MARQUES, SARA PATRICIA, 4770-583 SÃO COSME VALE (PT)
(74) Representative: Strehl Schübel-Hopf & Partner

(57) **Abstract**

A sheet comprising a support layer and a cover layer, wherein the cover layer contains a thermoplastic polyurethane as component (a) and a thermoplastic styrenic elastomer as component (b); a sewn product obtainable by sewing the sheet; a method of preparing the sheet; the use of the sheet or the sewn product as an artificial leather, in particular as a cover material in the interior of a vehicle.

## Description

### Field of the invention

The present invention relates to a sheet comprising a support layer and a cover layer containing thermoplastic polyurethane (TPU) and a thermoplastic styrenic elastomer (TPS), a method of preparing the sheet, and the use of the sheet as a surface material such as an artificial leather for trim in a vehicle.

### Background art

EP 3 533 601 A1 discloses a composite structure comprising a low-density foam layer, a textile layer, and a thermoplastic cover layer comprising polyolefin or polyvinylchloride and optionally comprising thermoplastic elastomers. The composite structure shows good tearing properties and haptics and is improved in terms of wrinkle formation and handling during processing, especially during sewing.

CN 210151469 U discloses an artificial leather that comprises a textile layer and a cover layer of thermoplastic styrenic elastomer and that is suitable for preparing sewn products.

### Problem to be solved by the invention

The state of the art discloses composite structures having several layers to provide the desired balance of, on the one hand, properties in terms of softness and flexibility to achieve good haptics and handling during processing such as sewing and, on the other hand, a facilitated production of the sheet and improved adhesion of the sheet layers.

The problem underlying the present invention was to provide a new structure achieving the desired balance of properties with few layers.

### Summary of the invention

The present application covers the following aspects.
[1] A sheet comprising a support layer and a cover layer, wherein the cover layer contains a thermoplastic polyurethane as component (a) and a thermoplastic styrenic elastomer as component (b).
   [1-1] The sheet according to aspect [1], wherein the support layer and the cover layer are directly bonded to each other.
   [1-2] The sheet according to any of the preceding aspects, which is suitable for preparing a sewn product obtainable by sewing the sheet and is preferably suitable for preparing a sewn product by folding the sheet, placing the A-side or B-side surfaces of two parts of the sheet together to provide a contact area, and sewing the two parts of the sheet in the contact area.
   [1-3] A combination of aspects [1] to [1-2] is preferred.
   [1-4] The sheet according to any of the preceding aspects, wherein the cover layer consists of a single layer or two sublayers.
   [1-5] The sheet according to any of the preceding aspects, wherein the content of each of component (a) and component (b) in the cover layer is at least 20 mass%, preferably at least 30 mass%.
   [1-6] The sheet according to any of the preceding aspects, wherein the cover layer is coated with a lacquer layer having a thickness of less than 30 µm.
   [1-7] The sheet according to any of the preceding aspects, wherein the sheet has stitch tear-out force of at least 40 N according to DIN EN ISO 23910.
   [1-8] A combination of aspects [1-3] and [1-7] is preferred.
   [1-9] The sheet according to any of the preceding aspects, wherein the sheet preferably shows no damages and no changes after 1,000,001 flexing cycles in a test according to DIN 53 351.
   [1-10] The sheet according to any of the preceding aspects, which has a light transmittance of 1 % to 100 %, preferably 1 % to 50 %, more preferably 5 % to 50 %.
   [1-11] The sheet according to any of the preceding aspects, wherein the sheet can be folded to form a double-layer structure, in which two B-sides of the sheet are layered on each other and contact each other at the folding edge, and the double-layer structure can be unfolded to its initial state, wherein the sheet preferably shows no visible damage or change at the folding edge after folding and unfolding.
[2] The sheet according to any of the preceding aspects, wherein the support layer is a textile layer.
   [2-1] The sheet according to aspect [2], wherein the textile layer contains or consists of one or more kinds of fibers selected from the group consisting of polyester, polypropylene, polyamide, and natural fibers such as cotton.
   [2-2] The sheet of aspect [2] or [2-1], wherein the support layer is a textile layer covered with a polyvinylchloride layer.
[3] The sheet according to any of the preceding aspects, wherein component (a) is aromatic.
   [3-1] The sheet according to any of the preceding aspects, wherein each urethane unit of component (a) contains an aromatic group. [3-2] The sheet according to any of the preceding aspects, wherein component (a) is derived from an aromatic diisocyanate.
   [3-3] A combination of aspects [3-1] and [1-3] is preferred. [3-4] A combination of aspects [3-1] and [1-8] is more preferred. [3-5] The sheet according to any of the preceding aspects, wherein the cover layer consists of two sublayers and component (a) of the A-side sublayer is aromatic, wherein the A-side sublayer preferably also contains component (b) and component (c).
[4] The sheet according to any of the preceding aspects, wherein component (b) is polystyrene-block-poly(ethylene-butylene)-block-polystyrene.
[5] The sheet according to any of the preceding aspects, wherein the cover layer contains a compatibilizer as component (c).
[6] The sheet according to any of the preceding aspects, wherein component (c) is a copolymer containing polyurethane blocks and styrenic polymer blocks.
   [6-1] The sheet according to aspect [6], wherein the styrenic polymer blocks are polymers of hydrogenated styrene-diene.
[7] The sheet according to any of the preceding aspects, wherein the support layer is a textile layer and the cover layer is directly bonded to the support layer and contains a thermoplastic aromatic polyurethane as component (a), a thermoplastic elastomer based on styrenic block copolymer as component (b), and a compatibilizer as component (c).
   [7-1] A combination of aspects [7] and [1-3] is preferred. [7-2] A combination of aspects [7] and [1-8] is more preferred. [7-3] A combination of aspects [7] and [3-1] is even more preferred.
[8] The sheet according to any of the preceding aspects, wherein the cover layer contains 20 to -80 parts by mass of component (a), 15 to 80 parts by mass of component (b), and 1 to 20 parts by mass of component (c), wherein the total of components (a) to (c) is 100 parts by mass.
   [8-1] The sheet according to any of the preceding aspects, wherein components (a) to (c) make up more than 80 mass%, preferably more than 90 mass% of the cover layer.
[9] The sheet according to any of the preceding aspects, wherein the cover layer has a Shore A hardness according to DIN 53505 of less than 50.
   [9-1] The sheet according to any of the preceding aspects, wherein the sheet has a Shore A hardness according to DIN 53505 of 35 to 50. [9-2] A combination of aspects [9] and [1-3] is preferred. [9-3] A combination of aspects [9] and [1-8] is more preferred. [9-4] A combination of aspects [9] and [3-3] is even more preferred. [9-5] A combination of aspects [9-4] and [7] particularly preferred.
[10] The sheet according to any of the preceding aspects, wherein the support layer is a textile layer having a thickness of 0.05 to 1.0 mm, preferably 50 to 300 µm, and the cover layer has a thickness of 0.1 to 1.0 mm.
[11] A sewn product obtainable by sewing the sheet according to any of the preceding aspects.
[12] A method of preparing a sheet according to any of the preceding aspects, comprising (i) a step of providing a molten cover layer raw material containing components (a), (b), and optionally (c), (ii) a step of applying the molten cover layer raw material onto a support layer, and (iii) a step of solidifying the composition to obtain the sheet.
[13] The method of aspect [12], wherein step (i) comprises (i-1) a step of providing a masterbatch containing a pigment as component (d) and (i-2) a step of mixing the masterbatch and the components (a) and (b) and optionally (c) to obtain the molten cover layer raw material.
   [13-1] The method of aspect [13], wherein mixing and melting in step (i-2) is carried out using an extruder.
   [13-2] The method of any of aspects [12] to [13-1], wherein step (ii) comprises applying the molten cover layer raw material on the support layer, e.g., a textile layer, such that the molten cover layer raw material and the support layer only partly interpenetrate each other.
   [13-3] A method of preparing a sewn product comprising sewing a sheet according to any of aspects [1] to [11].
   [13-4] The method according to aspect [13-3], comprising folding the sheet, placing the B-sides such as support layers together to provide a contact area and sewing the two parts of the sheet in the contact area.
[14] The use of a sheet according to any of aspects [1] to [10] or a sewn product according to aspect [11] as an artificial leather.
   [14-1] The use of a sheet as described in any of aspects [1] to [10] in a cut & sew process.
[15] The use of a sheet according to any of aspects [1] to [10] or a sewn product according to aspect [11] as a cover material in the interior of a vehicle.
   [15-1] Preferably, the use of aspect [15] is for upholstery such as seats.

### Advantages of the invention

The sheet according to the invention exhibits a low wrinkle formation when bent. This makes it easier to handle and, in particular, facilitates sewing. The manufacturing costs can be lowered by reducing the number of layers and by using a facilitated production in a one-step lamination process.

The combination of TPS and TPU decreases the hardness and elastic modulus thus allowing easier needle penetration into the sheet for cut and sew applications. The use of TPS is an inexpensive alternative to conventional materials. The addition of TPS improves the adhesion to the substrate and the thermal stability of the product.

The sheet can be advantageously used as a coating material in the interior of a vehicle.

### Embodiments of the invention

The sheet of the present invention may consist of or contain the support layer and the cover layer described herein. The support layer is arranged at the B-side and the cover layer is arranged at the A-side of the sheet. Herein, the terms "A-side" and "B-side" either refer to the sheet as a whole or to an individual layer. The layers are layered on each other either directly, i.e., the A-side of the support layer contacts the B-side of the cover layer without any material such as an adhesive disposed between them, or indirectly, i.e., having layer(s) or an adhesive disposed between them. The cover layer may optionally be coated with a lacquer layer. The sheet is a layer structure itself. Additional layers or structures may be arranged at the B-side of the support layer.

Herein, the terms "the sheet", "the support layer", and "the cover layer" refer to "the sheet according to the present invention", "the support layer contained in the sheet according to the present invention", and "the cover layer contained in the sheet of the present invention", respectively, unless explicitly stated otherwise.

In the case of direct bonding of the support layer to the cover layer, the layers may interpenetrate each other if the support layer contains voids, e.g. in the case of a foam or a textile. The interpenetrated structure is herein referred to as a compound structure. The compound structure consists of a part of the support layer and a part of the cover layer in their thickness direction. In each case, the term "a part" means that the respective layer is not included in the compound structure over the whole thickness direction of the respective layer. In other words, a full interpenetration is excluded, and both the cover layer and the support layer have a non-interpenetrated layer part in the thickness direction. As a result, the support layer such as the textile layer is not exposed at the A-side (i.e., the cover layer surface) of the sheet, and the cover layer is not exposed at the B-side (i.e., the support layer surface) of the sheet.

In the case of using an adhesive to bond the support layer and the cover layer, the adhesive only partly penetrates the support layer such that the support layer has a non-interpenetrated layer part in the thickness direction.

The cover layer may contain a structural element at its B-side, i.e., between the cover layer and the support layer. In that case, the cover layer is preferably bonded to the support layer by using an adhesive. The structural element may have optical properties. The structural element may be an opaque or colored pattern that forms a graphic design, image, or logo to serve decorative or indicative purposes. For instance, the structural element may be a very thin printed structure visible through the cover layer. Examples for applying the pattern are inkjet printing, screen printing, laser printing, or laser etching.

Preferably, the sheet is suitable for preparing a sewn product obtainable by sewing at least two sheet or two parts of the same sheet. The sewn product may be prepared by folding the sheet, placing two A-sides or B-side parts of the sheet together and sewing the two parts of the sheet in the contact area. In order for the sheet according to the invention to have the desired properties, such as easy processability when sewing, the sheet must not be too hard. For suitability for sewing, it is also important that the sheet has a suitable stitch tear-out force. This is preferably at least 40 N according to DIN EN ISO 23910. In one embodiment, the sheet is both suitable as a tearable coating for an airbag cover without a material weakening and suitable for preparing a sewn product obtainable by sewing at least two layers of the sheet.

In one embodiment, the sheet is formed exclusively by thermal bonding, i.e. by using a molten cover layer composition or at least partly molten cover layer. Preferably, the support layer is not melted at the temperature used in the thermal bonding. For instance, polypropylene fibers in the support layer may partly melt and be thermally bonded. On the other hand, polyester fibers may not melt and may be bonded to the cover layer by thermomechanical bonding, i.e., solely by penetration of the molten cover layer material into the textile layer. In the case of a connection of the support layer and the cover layer exclusively by thermal bonding, the connection is reversible, and support layer and the cover layer can be separated from each other at room temperature or by heating to melt at least the part of the cover layer that is part of the compound structure. In another embodiment, the bonding of the support layer and the cover layer is enforced by treating the sheet e.g. with irradiation or electron beams from the B-side of the support layer to form chemical bonds between within the compound structure. In that case, the connection between the support layer and the cover layer is not reversible, i.e. the layers cannot be separated by at least partly melting the cover layer.

The sheet according to the present invention may be opaque or translucent. Generally, a translucent structure allows the transmittance of more visible light than an opaque structure when light is emitted from the same light source and hits the structures. Herein, the meaning of the term "translucency" covers the meaning of "transparency". In general, transparency is the physical property of allowing light to pass through the material without being scattered. Translucency is a superset of transparency and allows light to pass through and allows scattering. In other words, a translucent medium allows the transport of light while a transparent medium not only allows the transport of light but allows for image formation. Transparent materials appear clear. Since the value of the light transmittance is affected by absorption, scattering, reflection and the like, the exact light transmittance values of the different components of the sheet may vary depending on the type of light source, the composition and thickness of the various layers. The light transmittance also differs for different wavelength ranges. The light transmittance of the layer structures described in the present application, i.e., the individual layers or any of the composite structures, respectively, is determined as follows: Equipment: Datacolor, model 850; Lamp: Xenon. The total transmittance is measured according to the user's guide provided by the manufacturer. A white plaque (e.g. Spectralon^{®} plaque) is used as an optical standard for transmission calibration and measurement. The white plaque is placed at the front aperture plate. The sample to be measured is placed between the sphere opening and the sensor. The transmittance is determined within the range of 400 to 700 nm at the wavelength λₘₐₓ of the maximum transmittance peak for the sample. The light transmittance [%] of a sample is defined as 100 % x (transmittance value measured at λₘₐₓ in the presence of the layer structure)/(transmittance value measured at λₘₐₓ in the absence of the layer structure). The light transmission means the permeability for light emitted at a position facing the B-side of the sheet or layer and detected at a position facing the A-side surface of the sheet or layer. The light transmittance of the sheet refers to the whole sheet if all layers are translucent. The light transmittance of the sheet may be 1 % to 100 %, 1 % to 90 %, 1 % to 50%, or 5 to 50 %, preferably 1% to 30%, more preferably 2 to 20%. A low light transmittance such as 1 % to 50 % may be advantageous for hidden-until-lit applications. To enable a hidden-until-lit property of hiding the elements arranged at the B-side of the cover layer when no light source is activated, the light transmittance of the film is preferably 1 to 50%, more preferably 1 to 30%, still more preferably 2 to 20% or 5 to 10% at λₘₐₓ. In case a hidden-until-lit property is not desired, the light transmittance of the film may be 10 to 90%, preferably 20 to 80%, still more preferably 30 to 70% at λₘₐₓ.

The sheet may contain additives such as UV stabilisers, pigments, heat stabilizers, and flame retardants. These additives may be particularly contained in the cover layer and the optional lacquer layer. Generally, a low concentration of additives may be preferred to achieve a very high light transmittance. Pigments may be selected from carbon black, organic red, organic yellow, phthalocyanine blue, and titanium white. To provide a sheet having uniform color and high transparency, the pigments are preferably small to reduce light scattering. The particle size of the pigments is preferably less than 10 µm, more preferably less than 1 µm, even more preferably less than 100 nm. A heat stabilizer helps preserve the properties of a polymer at elevated temperatures. Various heat stabilizers like metallic salts (stabilize PVC), organometallic compounds, non-metallic organic stabilizers, organophosphites and epoxies can be used. Organophosphites protect polymers during the manufacturing process. Phenolic antioxidants protect the polymer during its usable life. Phenolic antioxidants are radical scavengers which prevent thermal degradation of polymers. Their effectiveness increases when used in combination with phosphites, thioethers and light stabilizers. Other examples of antioxidants are sterically hindered phenols such as butylated hydroxytoluene (2,6-di-tert-butyl-4-methylphenol, BHT), butylated hydroxyanisole (BHA), tertiary-butylhydroquinone (TBHQ) and gallates. In particular, halogenated polymers such as poly(vinyl chloride) (PVC) may require the use of heat stabilizers.

A UV stabiliser as an additive may achieve the object of maintaining the desired light transmittance after an exposure to UV radiation. UV radiation ranges between wavelengths of 280 and 400 nm. Polymers are sensitive to certain wavelengths of UV radiation. For instance, a UV sensitive polymer is aromatic polyurethane. Suitable UV stabilizers may be Ultraviolet Absorbers and Hindered Amine Light Stabilizers (HALS). Rutile titanium oxide is effective in the 300-400 nm range but is not very useful in the very short wavelength UVB range below 315. Hydroxybenzophenone and hydroxyphenylbenzotriazole have the advantage of being particularly suitable for transparent applications. Other UV absorbers include oxanilides for polyamides, benzophenones for PVC and benzotriazoles and hydroxyphenyltriazines. Hindered Amine Light Stabilizers (HALS) share the 2,2,6,6-tetramethylpiperidine ring structure. HALS are particularly effective in polyolefins and polyurethane. Any of these compounds may be combined. Some of these combinations have synergistic effect. For example, benzotriazoles are often combined with HALS.

In the present invention, the terms "comprises," "comprising," "including," and "having," are inclusive and therefore specify the presence of stated features, steps, layers and/or components, but do not preclude the presence or addition of one or more other features, steps, layers, components, and/or groups thereof. The method steps, processes, and operations described herein are not to be construed as necessarily requiring their performance in the particular order discussed or illustrated, unless specifically identified as an order of performance. It is also to be understood that additional steps may be employed.

Whenever it is mentioned in the context of this description that individual compositions or layers are based on a certain material, this should be interpreted as the respective material forming the main constituent of the composition or layer, wherein other constituents may also be present in small quantities. In embodiments, the term "based on" a certain material means a content of more than 50 mass%, preferably 90 mass%, and more preferably 95 mass%.

As used herein, the singular forms "a," "an," and "the" may be intended to include the plural forms as well, unless the context clearly indicates otherwise. For instance, components are generally described in the singular form, such as "a" component or "containing a" component. Such singular form formulations are meant to include more than one of the indicated component, unless indicated otherwise.

The term "and/or" includes any and all combinations of one or more of the associated listed items. Percentages (%) are percentages by mass (% by mass) unless explicitly indicated otherwise. The standards and norms mentioned refer to the latest version available at the time this application was filed, unless indicated otherwise.

### Support layer

The support layer may be made of any material. For instance, the support layer may be a textile layer or a foam layer having open cells or closed cells. The support layer is preferably flexible and thin. Preferably the support layer consists of a textile layer. Examples of a textile layer are knitted fabrics, woven textiles, non-woven textiles, glass fiber textiles, spunlace, or a spacer fabric. A knitted fabric is a flexible material made by creating an interlocking bundle of yarns or threads, which are produced by spinning raw fibers into long and twisted lengths. A textile is not compact and comprises a large volume ratio of hollow spaces that are usually filled with air. The density of the textile layer is preferably 100 to 300 kg/m³.

The textile layer of the support layer may contain or consist of one or more kinds of fibers selected from the group consisting of polyester, polypropylene, polyamide, cotton and natural fibers.

The support layer may consist of a single layer, e.g., the textile layer forming the compound structure with the cover layer. Since the cover layer may also consist of a single layer, the sheet may consist of only two layers, i.e., the support layer and the cover layer, and an optional lacquer layer.

The support layer may contain other layers in addition to the textile layer. For instance, the support layer may be a textile layer bonded to a polyvinylchloride layer at its A-side or B-side. Another example is that the support layer may comprise a textile layer having a thickness of 0.3 to 5 mm, a foam layer having a thickness of 0.5 to 10 mm and a density or preferably 30 to 300 kg/m³, and, optionally, a textile layer having a thickness of 0.3 to 2.5 mm in this order, wherein each of the textile layers is preferably directly bonded to the foam layer. The direct bonding excludes an additional layer or adhesive layer between the textile layer and foam layer. Hence, the sheet may contain several layers without containing any adhesive layer. The foam layer may have adhesive properties so that it can adhere firmly to an A-side or B-side textile without the addition of another adhesive.

In embodiments, an adhesive layer may be arranged between the textile layer and the foam layer and/or between the foam layer and the optional textile layer. The adhesive may be a polyolefinic adhesive, a polyurethane adhesive, an acrylic adhesive, or a hot melt adhesive based on polyurethane (PUR). The adhesive may be used in a thickness of 40 µm. The support layer may contain a textile layer, an adhesive layer, a foam layer, an adhesive layer, and a textile layer in this order.

The B-side of the support layer may contain additional layers, e.g., a foam layer or a layer of polyvinylchloride, and/or functional elements such as touch sensors. In the case of functional elements, the sheet may be translucent and the B-side of the cover layer or the B-side of the support layer may contain opaque areas.

### Cover layer

The cover layer consists of or contains components (a) and (b). The cover layer has a thickness of preferably 100 µm to 1000 µm, more preferably 200 µm to 300 µm. The cover layer has a density of preferably at least 800 kg/m³, more preferably higher than 850 kg/m³. Preferably, the cover layer is compact. The cover layer may consist of one or more layers. Preferably, the cover layer consists of a single layer or two sublayers. In the case of two or more sublayers, the components recited herein, in particular components (a) to (c), may be contained in one or more or all sublayers. For instance, the aromatic component (a) may be contained only or at least in the upper (i.e., A-side) sublayer of a cover layer consists of two sublayers.

The cover layer preferably shows elastic properties and/or thermoplastic properties, more preferably both elastic and thermoplastic properties. The elastic properties and other physical properties such as the melting point and the softness of the film layer may be governed by its elastomer content. The cover layer is flexible and preferably shows no damages and changes after 500,000 flexing cycles, more preferably after 1,000,000 flexing cycles in a test according to DIN 53 351.

The cover layer may contain usual additives such as plasticizers, stabilizers, anti-aging agent (e.g. antioxidants), fillers and pigments (silica, TiOz, CaC0₃, Mg(OH)₂, carbon black, mica, kaolin, clay, coal dust, lignin, talc, BaSO₄, Al(OH)₃, ZnO, and MgO), flame retardants (e.g. antimony trioxide or zinc hydroxystannate), waxes, colorants, compatibilizers and other auxiliary substances (e.g. viscosity aids, adhesion promoters, etc.). Example of UV stabilisers are those mentioned above.

The cover layer of the sheet may have a grain, i.e. a three-dimensionally structured surface on the A-side covered with lacquer. The grain may be present in the cover layer only or both in the cover layer and the lacquer layer. In that case the sheet structure may be used as an artificial leather. The grain may be introduced by known methods such as embossing. The depth of the grain is less than the thickness of the cover layer. The grain can be produced using conventional methods. The grain is preferably applied to the artificial leather surface by means of an embossing roller while applying pressure and temperature after the lacquering.

The cover layer may be translucent. The optical properties of polymers are determined by their structure. Generally, amorphous polymers provide transparency while crystalline polymers provide opacity, particularly in thicker products such as injection molded end products. Crystallinity reduces the transparency by causing refraction and reflection of light and light scattering on the boundaries between the crystalline and amorphous regions. The light transmittance of semicrystalline polymers can be improved through additive technology. Crystalline structures are generally very ordered and are thus strong and rigid. On the other hand, amorphous polymers are characterized by a relatively low resistance to heat, toughness at low temperatures and low dimensional stability. Hence, it may be preferred that the polymers are not too amorphous and have a certain degree of crystallinity. In the present invention, the degree of crystallinity may be adjusted to achieve a desired balance of optical properties and other physical properties such as flexibility.

The cover layer may be coated with a lacquer layer. The lacquer may be a conventional material. The thickness of the lacquer layer may preferably be 1 to 30 µm, more preferably 3 to 10 µm. The lacquer layer is applied directly on top (i.e., the A-side surface) of the cover layer as a finish and a protection against chemical agents, physical damage such as scratches or abrasion, and UV radiation. The lacquer layer can further reduce the surface adhesion. Conventional lacquers used for artificial leather for the interior of vehicles can be employed, such as a lacquer layer based on a silicone-containing aliphatic polyurethane. The lacquer layer usually consists of one or more, preferably up to four, transparent layers of lacquer. The lacquer layer is preferably elastic. The properties of the lacquer layer such as elasticity and translucence may be adjusted to correspond to the respective properties of the cover layer.

### Component (a)

The cover layer contains thermoplastic polyurethane (TPU) as the component (a) of the cover layer. Component (a) does not contain styrenic units and is thus different from component (b). TPU is a thermoplastic elastomer comprising linear segmented block copolymers composed of hard and soft segments. A polyurethane is prepared from polyisocyanates such as diisocyanates and polyols such as diols. The isocyanates may be aliphatic or aromatic, and the polyol may be aliphatic or aromatic. An aliphatic group can be branched or unbranched and may have a carbon number of 1 to 10, in particular 1 to 6. It can be a methyl, ethyl, propyl, butyl, pentyl and/or hexyl group. The cycloaliphatic group can, for example, be based on a cyclopropyl, cyclobutyl, cyclopentyl, dicyclohexylmethane, cyclohexyl and/or isophorone group. The heterocyclic groups include the furfuryl group. The polyol may be a polymer with a molecular weight of 200 to 12,000, in particular 250 to 2,000. Examples are polyester polyols, polyether polyols, polythioether polyols, polycarbonate polyols and aliphatic polyacetals containing hydroxyl groups and aliphatic polycarbonates containing hydroxyl groups, or mixtures of at least two of these polyols. The TPU may contain groups derived from compounds containing reactive groups other than hydroxy groups, e.g., compounds having thiol groups or amine groups.

Preferably, the TPU contains aromatic groups and is thus an aromatic TPU. For instance, the TPU may be prepared by using aromatic isocyanates such as toluene diisocyanate (TDI), diphenylmethane diisocyanate (MDI), and naphthalene diisocyanate (NDI). The content of aromatic groups in the TPU may be more than 3 mass% or even more than 5 mass%. Aromatic TPU is stiffer than aliphatic TPU due to the presence of aromatic rings resulting in a higher hardness and tensile strength. Hence, aromatic TPU renders the cover layer stiffer and thus less suitable for cut and sew applications. The use of TPS renders the cover layer more flexible and may compensate the effect of aromatic TPU.

Th cover layer may contain a compatibilizer as the component (c). The compatibilizer enables or facilitates the preparation of a homogenous blend of components (a) and (b). Preferably, component (c) is a copolymer containing polyurethane blocks and styrenic polymer blocks, wherein the styrenic polymer blocks may be polymers of hydrogenated styrene-diene.

### Component (b)

The cover layer contains a thermoplastic styrenic elastomer (TPS) as the component (b). Component (b) does not contain urethane units and is thus different from component (a). TPS is a styrenic block copolymer and is preferably styrene-butadiene-styrene block copolymer (SBS) or styrene-ethylene-butene-styrene block copolymer (SEBS), i.e., polystyrene-block-poly(ethylene-butylene)-block-polystyrene. TPS is a thermoplastic elastomer (TPE), which is defined as an elastomer showing thermoplastic behaviour. The term "thermoplastic" denotes polymers or polymer compositions that show thermoplastic properties, in particular thermoreversibility. TPS has soft elastomer and a hard component.

Generally, there are the following generic classes of TPEs (designations according to ISO 18064): Styrenic block copolymer (TPS), thermoplastic polyolefin elastomer (TPO), thermoplastic vulcanizate (TPV), thermoplastic polyurethane (TPU), thermoplastic copolyester (TPC), melt processing rubbers, and thermoplastic polyamide (TPA). In addition to TPS, the cover layer may contain one or more of these TPEs other than TPS.

The content of TPS in the cover layer is preferably at least 50 %. The total content of thermoplastic polymers, i.e., TPS, TPEs (other than TPS), and thermoplastic polymers (other than TPS), in the cover layer is preferably at least 80 %, more preferably at least 90 %. Preferably, the total content of polymers in the cover layer consists of thermoplastic polymers and more preferably makes up at least 80 mass%, more preferably at least 90 mass% of the total mass of the cover layer. Preferably, the cover layer does not contain a polyolefin.

### Manufacturing method

The sheet according to the present invention may be prepared by a method comprising the following steps:
(i) a step of providing a molten cover layer raw material containing components (a), (b), and optionally (c), (ii) a step of applying the molten cover layer raw material onto a support layer, and (iii) a step of solidifying the composition to obtain the sheet.

The preparation method may start from a cover layer composition consisting of the thermoplastic elastomer and the other components to be contained in the final cover layer.

In step (i), the cover layer composition may be provided in the form of (A) particles such as granules of a cover layer composition or (B) a finished film containing the cover layer composition.

In the case of (A), step (i) comprises melting the particles of the cover layer composition, preferably using an extruder. A masterbatch containing a pigment as component (d) and the components (a) and (b) and optionally (c) may be mixed to obtain the molten cover layer raw material. The masterbatch is preferably used to enable a homogenous distribution of the pigments in the cover layer. In the case of (B), step (i) comprises heating the film at least on one side to at least partly melt the cover layer composition contained in the film. The cover layer composition may be selected to have a melting temperature that is lower than the melting temperature of the textile layer of the support layer. Thus, the molten cover layer composition penetrates the hollow spaces of the support layer without melting the fibers of the support layer. In that case, the cover layer and the support layer can be separated from each other by heating. Alternatively, the cover layer composition may be selected to have a melting temperature that is equal to or higher than the melting temperature of the support layer and that stands the temperature of the molten cover layer when in contact with it. Thus, the molten cover layer composition at least partly melts the fibers of the support layer when penetrating the hollow spaces. In that case, the cover layer and the support layer are more strongly bonded to each other.

In step (ii), the laminate forming is carried out preferably using an extruder in the case of (A). The molten cover layer composition may be extruded and applied onto the support layer, or the molten cover layer composition may be extruded onto a carrier and the support layer may be applied onto the cover layer composition. In both cases, the cover layer composition, the support layer, and the process conditions have to be selected such that the cover layer and the support layer interpenetrate each other to a desired extent. If pressure is applied in forming the laminate, the support layer is compressed thus enabling an easier and deeper penetration by the molten cover layer composition. As a result, the adhesion between the support layer and the cover layer may be stronger.

In the case of (B), step (ii) may comprise a step (ii-1) of forming a laminate of the film and the support layer and a step (ii-2) of forming a grained structure by embossing the other side of the film, wherein steps (ii-1) and (ii-2) may be carried out simultaneously. Step (ii) may be carried out using two cylinders. The laminate may be formed by pressing the partly molten side of the film to the support layer while being conveyer through the narrow gap between the two cylinders. The use of the cylinders having a defined gap width enables the preparation of a sheet having a defined thickness of the compound structure. The cylinder contacting the cover layer may have a grained structure which is embossed into the surface of cover layer. Thus, forming the laminate and embossing may be carried out in a single step.

### Examples

Cover layers were prepared as shown in Table 1.

**Table 1**

| | Example 1 | Comparative Example 1 | Comparative Example 2 |
|---|---|---|---|
| Component (parts by mass) | | | |
| Aliphatic TPU elastomer | | | 100 |
| Aromatic TPU | 40 | 100 | |
| SEBS | 60 | | |
| Compatibilizer | 7 | | |

| Property | | | |
|---|---|---|---|
| Scratch resistance | ++ | + | - |
| Shore A hardness | 47 | 82 | 64 |
| Structure | Amorphous | Crystalline | Crystalline |

The data show the advantageous properties of the use of a combination of TPU and TPS in the cover layer. The product of Example 1 is improved in terms of scratch resistance, softness, and low crystallinity.

## Claims

1. A sheet comprising a support layer and a cover layer, wherein the cover layer contains a thermoplastic polyurethane as component (a) and a thermoplastic styrenic elastomer as component (b).

2. The sheet according to claim 1, wherein the support layer is a textile layer.

3. The sheet according to any of the preceding claims, wherein component (a) is aromatic.

4. The sheet according to any of the preceding claims, wherein component (b) is polystyrene-block-poly(ethylene- butylene)-block-polystyrene.

5. The sheet according to any of the preceding claims, wherein the cover layer contains a compatibilizer as component (c).

6. The sheet according to any of the preceding claims, wherein component (c) is a copolymer containing polyurethane blocks and styrenic polymer blocks.

7. The sheet according to any of the preceding claims, wherein the support layer is a textile layer, and the cover layer is directly bonded to the support layer and contains a thermoplastic aromatic polyurethane as component (a), a thermoplastic elastomer based on styrenic block copolymer as component (b), and a compatibilizer as component (c).

8. The sheet according to any of the preceding claims, wherein the cover layer contains 20 to 80 parts by mass of component (a), 15 to 80 parts by mass of component (b), and 1 to 20 parts by mass of component (c), wherein the total of components (a) to (c) is 100 parts by mass.

9. The sheet according to any of the preceding claims, wherein the cover layer has a Shore A hardness according to DIN 53505 of less than 50.

10. The sheet according to any of the preceding claims, wherein the support layer is a textile layer having a thickness of 0.05 to 1.0 mm, and the cover layer has a thickness of 0.1 to 1.0 mm.

11. A sewn product obtainable by sewing the sheet according to any of claims 1 to 10.

12. A method of preparing a sheet according to any of claims 1 to 10, comprising (i) a step of providing a molten cover layer raw material containing the components (a), (b), and optionally (c), (ii) a step of applying the molten cover layer raw material onto a support layer, and (iii) a step of solidifying the composition to obtain the sheet.

13. The method of claim 12, wherein step (i) comprises (i-1) a step of providing a masterbatch containing a pigment as component (d) and (i-2) a step of mixing the masterbatch and the components (a) and (b) and optionally (c) to obtain the molten cover layer raw material.

14. The use of a sheet according to any of claims 1 to 10 or a sewn product according to claim 11 as an artificial leather.

15. The use of a sheet according to any of claims 1 to 10 or a sewn product according to claim 11 as a cover material in the interior of a vehicle.
